# EUROPEAN PATENT SPECIFICATION

(11) **EP 0 771 368 B1**
(45) Date of publication and mention of the grant of the patent: **13.10.1999**
(21) Application number: 95929316.8
(22) Date of filing: 25.07.1995
(51) Int. Cl.: C23C 22/56, C09D 5/08, C09D 133/06, C09D 133/14

(54) **PROCESS FOR TREATING THE SURFACE OF ALUMINUM SHEET FOR CAP MANUFACTURING**
VERFAHREN FÜR DIE BEHANDLUNG VON ALUMINIUMBLECHEN FÜR DIE HERSTELLUNG VON VERSCHLÜSSEN
PROCEDE DE TRAITEMENT DE LA SURFACE DE FEUILLES EN ALUMINIUM POUR LA FABRICATION DE BOUCHONS

(30) Priority: 26.07.1994 JP 17386794
(43) Date of publication of application: 07.05.1997
(73) Proprietor: HENKEL CORPORATION, Plymouth Meeting, PA 19462 (US)
(72) Inventor: NAKAMURA, Mitsuru, Hiratsuka-shi Kanagawa-ken 254 (JP); NAKADA, Kazuya, Hiratsuka-shi Kanagawa-ken 254 (JP); WADA, Hiroyuki, Hiratsuka-shi Kanagawa-ken 254 (JP)
(74) Representative: Sanderson, Laurence Andrew
(86) International application number: US9509135
(87) International publication number: WO9603534

(56) References cited:
- EP-A- 0 173 300
- GB-A- 2 009 753
- US-A- 3 912 548
- US-A- 4 141 868
- US-A- 4 191 596
- US-A- 4 756 975
- US-A- 5 122 202
- US-A- 5 129 967
- US-A- 5 158 622
- US-A- 5 292 379
- US-A- 5 328 525

## Description

This invention relates to a process for treating the surface of aluminum and aluminum alloy sheet, particularly sheet intended for the manufacture of caps (hereinafter referred to in some cases as aluminum cap stock sheet). More particularly, this invention relates to a process for treating the surface of aluminum cap stock sheet that forms thereon a polymer coating that is highly paint adherent even after the forming operation.

In addition to having sufficient strength, aluminum cap stock sheet must generally have an excellent processability and workability, because of the deep-drawing operation used to form caps. Phosphate-chromate treatments have been executed on aluminum cap stock sheet with the objective of imparting thereto corrosion resistance and paint adherence. However, paint film adherence during the forming operation is inadequate when phosphate-chromate treatments are used by themselves, with the result that paint exfoliation can still occur.

As one example of art directed to solving this problem, Japanese Patent Publication Number Sho 54-18664 [18,664/1979] discloses a "waterborne composition for the treatment of metal surfaces". This invention is characterized by the use of a waterborne composition containing a water-soluble zirconium compound plus a water-soluble or water-dispersible resin (e.g., polyacrylic acid, etc.) as a paint undercoating treatment. Unfortunately, in the case of cap stock, which is subjected to a severe forming operation, the undercoating film provided by the described composition is unable to follow deformation of the material during the forming operation, with the result that the art in this invention again does not always prevent such phenomena as paint exfoliation.

Japanese Patent Application Laid Open [Kokai or Unexamined] Number Sho 62-253574 [253,574/1987] discloses a "waterborne composition for application as a paint undercoating treatment for aluminum and its alloys". This invention seeks to improve paint adherence through the addition of another essential component to the known composition of water-soluble zirconium compound + polyacrylic acid. This additional component consists of a water-soluble substance that contains the amino, amide, or imino group. However, the presence of said water-soluble substance containing the amino, amide, or imino group as an essential component of the undercoating treatment bath causes the treatment bath to have a short pot life and therefore greatly complicates the maintenance of stable film characteristics.

UK Patent Specification No. 2,009,753 describes waterborne anti-corrosive film coatings which comprise a water-soluble, film-rorming, crossiinkable resin having hydroxyl groups and onium salt radicals together with a titanium or zirconium chelate.

Thus, there has yet to appear a surface treatment process that provides the surface of aluminum cap stock with a treatment film that, after the forming operation, is strongly adherent to paint films applied on the aluminum or aluminum alloy stock and is also highly corrosion resistant. Moreover, such a process in which the treatment bath has a long pot life is also unknown.

Therefore, the present invention takes as it object the introduction of a process, for treating the surface of aluminum and aluminum alloys, which uses a waterborne composition in which the undercoating treatment bath is relatively stable during prolonged use and which provides corrosion resistance and paint adherence even after a forming operation such as is used for cap manufacturing.

The present inventors discovered that the aforementioned object could be accomplished by the formation of a polymer coating on the surface of aluminum sheet or aluminum alloy sheet by coating thereof with a liquid waterbome composition in which a water-soluble zirconium compound is combined with at least one selection from acrylic polymers and copolymers that have a glass-transition temperature no greater than 0°C, and by thereafter drying, preferably without any intermediate rinsing.

Accordingly, the present invention provides a process for treating a surface of aluminum or aluminum alloy sheet, said process comprising the steps of:
(i) covering the surface of the aluminum or aluminum alloy sheet with a liquid waterbome composition comprising:
   (A) a polymer component consisting of one or more acrylic polymer(s) and/or copolymer(s) that have a glass-transition temperature no greater than 0°C;
      and
   (B) a component selected from the group consisting of one or more water-soluble zirconium compounds;
   and
(ii) drying onto the aluminum or aluminum alloy surface at least part of the liquid waterbome composition coated thereon in step (i);
so as hereby to form an adherent polymer film on the aluminum or aluminum alloy surface.

Aluminum sheet and aluminum alloy sheet comprise the aluminum and aluminum alloy cap stock to which the present invention is directed. The aluminum alloy is specifically exemplified by aluminum-manganese-iron alloys, aluminum-iron-silicon alloys, aluminum-iron-magnesium alloys, and the like. Such aluminum and aluminum alloy stock may be subjected to the present invention after the preliminary execution thereon of a conventional phosphate-chromate treatment, zirconium conversion treatment, or the like, as described in the article entitled "Aruminiumu no kasei shori no genjou to kongo" [Title in English: "Current and Future Status of the Conversion Treatment of Aluminum"] in *Nihon Paakaraijingu Gihou* [Journal name in English: *Nihon Parkerizing Technical Reports],* **1988**, No. 1, published on 3 July 1988.

An essential aspect of the present invention consists of the use as a paint undercoating of a polymer coating, preferably crosslinked, that is composed of a water-soluble zirconium compound and at least 1 selection from acrylic polymers and copolymers that have a glass-transition temperature no greater than 0 °C.

The acrylic polymer with a glass-transition temperature of 0 °C or less that is an essential component of the paint undercoating film according to the present invention can be a homopolymer of such polymerizable monomers as, for example, ethyl acrylate, isopropyl acrylate, 2-ethylhexyl acrylate, n-butyl acrylate, n-hexyl methacrylate, lauryl methacrylate, 2-hydroxyethyl acrylate, hydroxypropyl acrylate, and the like.

Acrylic copolymers with a glass-transition temperature of 0 °C or less may also be used as all or part of one essential component of the paint undercoating film according to the present invention. When a copolymer of two or more acrylic monomers is used in this invention, the degree(s) of polymerization of each acrylic monomer must be controlled in such a manner that the glass-transition temperature of the copolymer is 0 °C or less.

The homopolymers and copolymers to be used in the invention preferably have molecular weights in the range from 2,000 to 100,000 and more preferably in the range from 10,000 to 50,000.

Preferred examples of copolymers suitable for use according to the invention are copolymers of:
(A.1) at least one acrylic monomer having in each molecule at least one moiety selected from the group consisting of carboxyl, hydroxyl, amide, and glycidyl; and
(A.2) at least one acrylate ester monomer.

A preferred paint undercoating film is a crosslinked polymer film that comprises, preferably consists essentially of, or more preferably consists of, (A) an acrylic copolymer including residues from components (A.1) and (A.2) as described above and (B) a water-soluble zirconium compound.

Component (A.1) as described above is exemplified by such polymerizable monomers as acrylic acid, methacrylic acid, maleic acid, itaconic acid, 2-hydroxyethyl methacrylate, hydroxypropyl methacrylate, acrylamide, N-methylolacrylamide, diacetone acrylamide, and glycidyl methacrylate.

Acrylate ester monomer component (A.2) is exemplified by such polymerizable monomers as ethyl acrylate, isopropyl acrylate, 2-ethylhexyl acrylate, n-butyl acrylate, n-hexyl methacrylate, lauryl methacrylate, 2-hydroxyethyl acrylate, hydroxypropyl acrylate, and the like.

The discussion will now turn to the water-soluble zirconium compound(s) that are also an essential component of the treatment agent according to the present invention. Typical examples of subject water-soluble zirconium compounds are the alkali metal and ammonium zirconium carbonates, ammonium fluozirconate, zirconium acetate, zirconium nitrate, and zirconium sulfate. Also useable are any other water-soluble zirconium compounds that are able to deposit a zirconium compound on the surface of aluminum or aluminum alloy upon drying.

The acrylic polymer and/or copolymer is preferably used in the present invention at 0.5 to 2.0 weight parts per 1 weight part of the water-soluble zirconium compound. At less than 0.5 weight part of acrylic (co)polymer per 1 weight part of water-soluble zirconium compound, the polymer film is often unable to follow deformation of the material during the forming operation on the polymer film-coated aluminum or aluminum alloy; this can result in a reduced adherence in the worked region. At an amount in excess of 2.0 weight parts, the acrylic (co)polymer often does not exhibit an adequate water resistance, so that paint adherence will be reduced in some cases.

Water is the main component of the solvent/continuous phase for the paint undercoating treatment agent in the instant invention. However, a water-soluble organic solvent, such as an alcohol, ketone, monoether of a glycol, etc. may also be used at no more than 5 weight parts per 100 weight parts water for the purpose of adjusting the drying rate or improving the coatability.

The viscosity and solids concentration of the paint undercoating treatment agent of the instant invention preferably should be adjusted so as to provide, after application of the treatment agent to the surface of the aluminum or aluminum alloy and drying, a zirconium compound add-on of from 1 to 50 milligrams per square meter (hereinafter usually abbreviated as "mg/m²"), measured as its stoichiometric equivalent as ZrO₂. The viscosity and solids concentration are preferably also selected so as to yield a uniform undercoating film. The particularly preferred range for the zirconium compound add-on is from 5 to 30 mg/m² as ZrO₂. Good adherence at the worked regions is not usually obtained with less than 1 mg/m² as ZrO₂ or with more than 50 mg/m² as ZrO₂.

The paint undercoating treatment agent used by the present invention can be applied to the surface of the aluminum cap stock sheet by any suitable coating technique(s) such as dipping, spraying, roll coating and flow coating. The drying process is also not critical, but the use of a hot air current of at least 110°C for formation of the polymer film is preferred.

The various paints appropriate to the particular objective of protection or decoration can be applied on aluminum or aluminum alloy that has been subjected to a paint undercoating treatment according to the instant invention.

In order to obtain a relatively long pot life for a liquid treatment composition used according to this invention, the composition preferably does not contain any substantial amount of any water-soluble substance containing amino, amide, or imino moieties, except possibly for the acrylic copolymer itself.

The present invention will be explained in greater detail through the working and comparative examples provided below.

### General Procedures for the Examples and Comparison Examples

The sample material, process for forming the paint undercoating films and protective paint coatings, treatment process, and test process used were as described below, unless a specific exception is noted.

### (1) Sample material

The cap stock consisted of JIS (Japanese Industrial Standard) type A-3105 aluminum sheets with a thickness of 0.25 millimeters (hereinafter usually abbreviated as "mm"), a width of 200 mm, and a length of 250 mm.

### (2) Formation of the undercoating films

Table 1 reports the compositions of the treatment agents used in the working and comparative examples to form the undercoating films. The undercoating films were produced by using a roll coater to apply the undercoating treatment agent described in Table 1 onto the aforementioned aluminum sheet and then baking for 10 seconds in a 245 °C oven to form a film with the specified add-on mass.

**Table 1**

| COMPOSITIONS OF THE TREATMENT AGENTS USED TO FORM THE PAINT UNDERCOATING FILMS | | | | |
|---|---|---|---|---|
| **No.** | **Characteristics of Acrylic Component (A)** | | **Water-Soluble Zirconium Compound (B)** | **Ratio by Weight of Solids, (A)/(B)** |
| | **Monomer(s) Used to Make** | **T**_{**g**}**, °C** | | |
| According to the Invention | | | | |
| 1 | Hydroxypropylacrylate only | -7 | AZC | 1/1 |
| 2 | 2-Hydroxyethylacrylate only | -15 | Zirconium acetate | 1/1 |
| 3 | 95 Mole % of2-HEA + 5 mole % of acrylic acid | -9 | Zirconium acetate | 1/1 |
| 4 | 70 Mole % of 2-HEA + 30 mole % of methacrylic acid | -20 | AZC | 1/1 |

| Comparisons | | | | |
|---|---|---|---|---|
| 5 | Acrylic acid only | 100 | AZC | 1/1 |
| 6 | Hydroxypropylacrylate only | -7 | None | N.a. |
| 7 | None | N.a. | AZC | N.a. |
| Abbreviations for Table 1 T_{g} = Glass transition temperature; AZC = ammonium zirconium carbonate; 2-HEA = 2-hydroxyethylacrylate; N.a. = Not applicable. | | | | |

### (3) Formation of the protective paint coating

An epoxy-phenol resin paint was used to produce the protective paint coatings. The protective paint coating was produced by using a roll coater to apply the epoxy-phenol resin paint over the paint undercoating film already formed on the aluminum sheet. This was followed by baking for 10 minutes at 180 °C to form a coating with a dry weight of 50 milligrams per square decimeter (hereinafter usually abbreviated as "mg/dm²").

### (4) Treatment conditions and process

Variations in the treatment conditions and process used in the working and comparative examples are reported in Table 2. In addition to the variations shown in Table 2, all substrates in all the working and comparative examples were subjected to the following non-varying treatments before the conversion treatment shown in Table 2: Degreasing by spraying for 5 seconds at 60 °C with FINECLEANER® 4377K, an alkaline degreaser commercially available from Nihon Parkerizing Company, Limited, and then water rinsing by spraying tap water for 20 seconds. Also, all substrates in all the examples and comparison examples were subjected to drying in a hot air current at 80 °C for 2 minutes after the pretreatment water rinse and before the application of the treatment agent shown in Table 2. Finally, all substrates in all the examples and comparison examples received the following treatments after the paint undercoating treatment shown in Table 2: Roll coating with epoxy-phenol paint and drying in a current of air at 180 °C for 10 minutes. The reference superscripts in Table 2 refer to the following: (*1) ALCHROM® K702, a chromium phosphate-based conversion treatment agent, commercially available from Nihon Parkerizing Company, Ltd., which was sprayed on the samples for 5 seconds at 50 °C and (*2) ALODINE® 404, a zirconium-based conversion treatment agent, commercially available from Nihon Parkerizing Company, Ltd., which was sprayed on the samples for 20 seconds at 40 °C.

### (5) Evaluation test process

### (5-1) Hot water resistance

For this test, the test sheet lacked the protective paint coating but had been processed up to and including the paint undercoating treatment. The test

**Table 2**

| TREATMENT VARIATIONS FOR EXAMPLES 1 - 6 AND COMPARISON EXAMPLES 1 - 5 | | | | | |
|---|---|---|---|---|---|
| **No.** | **Pretreatment** | | **Paint Undercoating Treatment** | | |
| | **Conv. Treat.** | **Water Rinse?** | **Treatment Agent Used** | **Hot Air Drying?** | **Zr Add-on, mg/M**^{**2**} |
| Ex 1 | None | No | 1 | Yes | 10 |
| Ex 2 | None | No | 2 | Yes | 10 |
| Ex 3 | (*1) | Yes | 1 | Yes | 10 |
| Ex 4 | (*1) | Yes | 3 | Yes | 10 |
| Ex 5 | (*1) | Yes | 4 | Yes | 10 |
| Ex 6 | (*2) | Yes | 1 | Yes | 10 |
| CE 1 | None | No | None | No | 0 |
| CE 2 | (*1) | Yes | None | No | 0 |
| CE 3 | (*1) | Yes | 5 | Yes | 10 |
| CE 4 | (*1) | Yes | 6 | Yes | 10 |
| CE 5 | (*1) | Yes | 7 | Yes | 0 |
| Abbreviations for Table 2 No. = Number; Conv. Treat. = Conversion Treatment; mg/M² = milligrams per square meter; Ex = Working Example; CE = Comparison Example. | | | | | |
| Other Notes for Table 2 The explanations of the meanings of the symbols in the column headed "Conv. Treat." are given in the main text. When a pretreatment water rinse was used, it was with tap water for 20 seconds. The numbers in the column headed "Treatment Agent Used" refer to the treatment agents identified by number in Table 1. When hot air drying was used as part of the paint undercoating treatment, it was with air at 245 °C for 10 seconds. | | | | | |

sheet was immersed in water at 95 °C for 20 minutes, and any changes in appearance were then noted and reported according to the following scale:
- ++ =: no change in appearance
- + =: slight whitening
- x =: distinct whitening

### (5-2) Corrosion resistance

The test sheet for this test lacked the protective paint coating but had been processed up to and including the paint undercoating treatment. The test sheet was subjected to salt spray testing according to JIS Z-2731 for 300 hours, and the extent of white rust development was then scored according to the following scale:
- ++ =: area of rust development is less than 3 %
- + =: area of rust development is from at least 3 % up to but not including 30 %
- x =: area of rust development is at least 30 %

### (5-3) Formability

The treated sheet was cut to give a disk with a diameter of 135 mm. This was subjected to a high-speed cylindrical deep-drawing test using a punch diameter of 60 mm, a blank holding pad pressure of 1.2 tons, and a deep-draw velocity of 30 meters/minute. Press oil (#640 from Nippon Kousakuyu) was applied at 2 grams per square meter for this operation. Then, to evaluate the formability, the thus-formed test specimen was placed in a laboratory high-pressure steam autoclave sterilizer (from Sanyo Denki) loaded with distilled water. The autoclave was run for 30 minutes after a temperature of 120 °C had been established. A peeling test was then carried out on a crosshatch pattern using cellophane tape (from Nichiban), and the results were reported on the following evaluation scale:
- ++ =: no peeling
- + =: peeling over less than 5 % of the area
- x =: peeling over an area of at least 5 %.

The results of these tests are shown in Table 3. These results make it clear that, by comparison with the undrawn state the undercoated cap stock of Comparative Example 3 had a better hot water resistance and corrosion resistance than the untreated sheet of Comparative Example 1 and the phosphate-chromate film bearing sheet of Comparative Example 2. However, Comparative Example 3 evidenced an unsatisfactory formability. In Comparative Example 4, in which the water-soluble zirconium compound was omitted from the undercoating film, both the hot water resistance and the formability were unsatisfactory.

**Table 3**

| PERFORMANCE TEST RESULTS FOR EXAMPLES 1 - 6 AND COMPARISON EXAMPLES 1 - 5 | | | |
|---|---|---|---|
| **Number** | **Result of Evaluation for:** | | |
| | **Hot Water Resistance** | **Corrosion Resistance** | **Formability** |
| Ex 1 | + + | + + | + + |
| Ex 2 | + + | + + | + + |
| Ex 3 | + + | + + | + + |
| Ex 4 | + + | + + | + + |
| Ex 5 | + + | + + | + + |
| Ex 6 | + + | + + | + + |
| CE 1 | x | x | x |
| CE 2 | + | + + | + |
| CE 3 | + | + + | + |
| CE 4 | + | + | + |
| CE 5 | + | + | + |
| Abbreviations for Table 3 Ex = Working Example; CE = Comparison Example. | | | |

The performance was also inadequate in Comparative Example 5, which concerned the application of only the water-soluble zirconium compound.

In contrast to the preceding results, the undercoated stock prepared in Examples 1 to 6 according to the present invention had an excellent hot water resistance and corrosion resistance and also an excellent post-forming adherence.

The pot lives of some treatment bath compositions was measured by comparing the formability results achieved with the bath compositions immediately after mixing and then later after aging the same bath compositions at 40 °C for many days after mixing. The coated metal samples for testing the formability were prepared by the same procedures, before and after the treatment with the baths as shown in Table 4, as were used for Example 3 above, and the formability was measured as described above. Table 4 reports the treatment bath compositions used in these pot life tests and the results of these tests.

**Table 4**

| COMPOSITIONS AND RESULTS FOR POT LIFE TESTING | | | | | | |
|---|---|---|---|---|---|---|
| **No.** | **Active Ingredients in Treatment Bath** | | | **Formability Test Results** | | |
| | **Acrylate Polymer or Copolymer** | **Zirconium Source** | **Third Component** | **Immediately After Mixing** | **After Aging at 40 °C for:** | |
| | | | | | 10 Days | 30 Days |
| Ex 7 | HPA-Hom | ZA | None | + + | + + | + + |
| Ex 8 | 2-HEA-Hom | ZA | None | + + | + + | + + |
| Ex 9 | 1 MA/9 2-HEA | AZC | None | + + | + + | + + |
| CE 6 | A-Hom | AZC | γ-APES | + + | + | + |
| CE 7 | A-Hom | AZC | Urea resin | + + | + | + |
| Abbreviations for Table 4 No. = Number; HPA-Hom = hydroxypropyl acrylate homopolymer; ZA = zirconium acetate; 2-HEA-Hom = Homopolymer of 2-hydroxyethyl acrylate; 1 MA/9 2-HEA = copolymer of methacrylic acid and 2-hydroxyethyl acrylate in a weight ratio of 1:9; AZC = ammonium zirconium carbonate; A-Hom = acrylic acid homopolymer; γ-APES = gamma-aminopropylethoxysilane ; Ex = Working Example; CE = Comparison Example. | | | | | | |
| Other Notes for Table 4 The amount of acrylate polymer was 5 g/L, and the amount of zirconium source was such as to give a stoichiometric equivalent of 5 g/L of ZrO₂, in every instance in Table 4. The amount of urea resin was 5 g/L and the amount of γ-APES was 0.8 g/L . | | | | | | |

A third component was added in Comparative Examples 6 and 7 for the purpose of improving the adherence. However, the formability was observed to have deteriorated after even 10 days of aging at 40 °C in the case of Comparative Examples 6 and 7. In contrast to this, an excellent formability was obtained in Examples 7 to 9 according to the present invention even after aging for 30 days at 40 °C; this indicated an excellent pot life for compositions according to the invention. Thus a process according to the present invention for treating aluminum and aluminum alloy cap stock sheet can impart thereto a paint adherence that is excellent even after the forming operation. The invention composition is also stable and provides an excellent pot life.

## Claims

1. A process for treating a surface of aluminium or aluminium alloy sheet, said process comprising the steps of:
(i) covering the surface of the aluminium or aluminium alloy sheet with a liquid waterborne composition comprising:
(A) a polymer component consisting of one or more acrylic polymer(s) and/or copolymer(s) that have a glass-transition temperature no greater than 0°C;
and
(B) a component selected from the group consisting of one or more water-soluble zirconium compounds;
and
(ii) drying onto the aluminium or aluminium alloy surface at least part of the liquid waterborne composition coated thereon in step (i);
so as hereby to form an adherent polymer film on the aluminium or aluminium alloy surface.

2. A process as claimed in claim 1, wherein the polymer component (A) is one or more copolymers of:
(A.1) at least one acrylic monomer having in each molecule at least one carboxyl, hydroxyl, amide and/or glycidyl moiety;
and
(A.2) at least one acrylate ester monomer.

3. A process as claimed in claim 1 or claim 2, wherein the ratio by weight in the liquid waterborne composition of component (A) to component (B) is in the range of from 0.5:1.0 to 2.0:1.0.

4. A process as claimed in any of the preceding claims, wherein the polymer component (A) is one or more polymer(s) and/or copolymer(s) with a molecular weight in the range of from 2,000 to 100,000.

5. A process as claimed in any of the preceding claims, wherein the polymer component (A) is one or more polymer(s) and/or copolymer(s) with a molecular weight in the range from of 10,000 to 50,000.

6. A process as claimed in any of the preceding claims, wherein the adherent polymer film present on the aluminium or aluminium alloy surface at the end of step (ii) contains an amount of zirconium stoichiometrically corresponding to from 1 to 50 mg/m² of ZrO₂.

7. A process as claimed in any of the preceding claims, wherein the adherent polymer film present on the aluminium or aluminium alloy surface at the end of step (ii) contains an amount of zirconium, stoichiometrically corresponding to from 5 to 30 mg/m² of ZrO₂.

8. A process as claimed in any of the preceding claims wherein the liquid waterborne composition used in step (i) additionally contains a water-soluble organic solvent present in the concentration of less than 5 parts by weight per 100 parts by weight of water.

9. A process as claimed in any of the preceding claims, wherein the procedure of step I is carried out by dipping, spraying, roll-coating and/or flow-coating, and the procedure of step (ii) is carried out by the use of a current of hot air with a temperature of at least 110°C.

10. A process as claimed in any of the preceding claims, when applied to aluminium cap stock sheet.

## Patentansprüche

1. Verfahren zur Behandlung einer Oberfläche eines Blechs aus Aluminium oder einer Aluminiumlegierung, wobei das Verfahren die folgenden Schritte umfaßt:
(i) Bedecken der Oberfläche des Blechs aus Aluminium oder der Aluminiumlegierung mit einer flüssigen Zusammensetzung auf Wasserbasis, umfassend:
(A) eine Polymerkomponente, die aus einem oder mehreren Acrylpolymeren und/oder Copolymeren besteht, die eine Glasübergangstemperatur von nicht mehr als 0°C haben; und
(B) eine Komponente, die aus der Gruppe ausgewählt ist, die aus einer oder mehreren wasserlöslichen Zirconiumverbindungen besteht;
und
(ii) Auftrocknen wenigstens eines Teils der flüssigen Zusammensetzung auf Wasserbasis, die in Schritt (i) auf die Oberfläche des Aluminiums oder der Aluminiumlegierung aufgetragen wurde, auf dieselbe;
so daß dadurch ein anhaftender Polymerfilm auf der Oberfläche des Aluminiums oder der Aluminiumlegierung entsteht.

2. Verfahren gemäß Anspruch 1, wobei es sich bei der Polymerkomponente (A) um ein oder mehrere Copolymere von
(A.1) wenigstens einem Acrylmonomer, das in jedem Molekül wenigstens eine Carboxy-, Hydroxy-, Amid- und/oder Glycidylgruppe enthält, und
(A.2) wenigstens einem Acrylsäureestermonomer
handelt.

3. Verfahren gemäß Anspruch 1 oder 2, wobei das Gewichtsverhältnis von Komponente (A) zu Komponente (B) in der flüssigen Zusammensetzung auf Wasserbasis im Bereich von 0,5:1,0 bis 2,0:1,0 liegt.

4. Verfahren gemäß einem der vorstehenden Ansprüche, wobei es sich bei der Polymerkomponente (A) um ein oder mehrere Polymere und/oder Copolymere mit einem Molekulargewicht im Bereich von 2000 bis 100000 handelt.

5. Verfahren gemäß einem der vorstehenden Ansprüche, wobei es sich bei der Polymerkomponente (A) um ein oder mehrere Polymere und/oder Copolymere mit einem Molekulargewicht im Bereich von 10000 bis 50000 handelt.

6. Verfahren gemäß einem der vorstehenden Ansprüche, wobei der am Ende von Schritt (ii) auf der Oberfläche des Aluminiums oder der Aluminiumlegierung vorhandene anhaftende Polymerfilm eine Menge Zirconium enthält, die stöchiometrisch 1 bis 50 mg ZrO₂ pro m² entspricht.

7. Verfahren gemäß einem der vorstehenden Ansprüche, wobei der am Ende von Schritt (ii) auf der Oberfläche des Aluminiums oder der Aluminiumlegierung vorhandene anhaftende Polymerfilm eine Menge Zirconium enthält, die stöchiometrisch 5 bis 30 mg ZrO₂ pro m² entspricht.

8. Verfahren gemäß einem der vorstehenden Ansprüche, wobei die in Schritt (i) verwendete flüssige Zusammensetzung auf Wasserbasis zusätzlich ein wasserlösliches organisches Lösungsmittel enthält, das in einer Konzentration von weniger als 5 Gewichtsteilen pro 100 Gewichtsteile Wasser vorhanden ist.

9. Verfahren gemäß einem der vorstehenden Ansprüche, wobei der Vorgang von Schritt (i) durch Tauchen, Sprühen, Aufwalzen und/oder Fluten durchgeführt wird und der Vorgang von Schritt (ii) durch die Verwendung eines Heißluftstroms mit einer Temperatur von wenigstens 110°C durchgeführt wird.

10. Verfahren gemäß einem der vorstehenden Ansprüche, das auf Aluminiumbleche angewendet wird, aus denen Verschlüsse hergestellt werden.

## Revendications

1. Procédé pour traiter une surface de feuille d'aluminium ou d'alliage d'aluminium, ledit procédé comprenant les étapes consistant à :
(i) recouvrir la surface de la feuille d'aluminium ou d'alliage d'aluminium avec une composition liquide portée par l'eau comprenant:
(A) un composant polymère constitué par un ou plusieurs polymères acryliques et/ou copolymères qui ont une température de transition vitreuse ne dépassant par 0°C ;
et
(B) un composant choisi dans le groupe constitué par un ou plusieurs composés de zirconium hydrosolubles ;
et
(ii) de séchage sur la surface d'aluminium ou d'alliage d'aluminium d'au moins une partie de la composition liquide portée par l'eau revêtue sur celle-ci à l'étape (i) ;
de façon à former ainsi un film polymère adhésif sur la surface d'aluminium ou d'alliage d'aluminium.

2. Procédé selon la revendication 1, dans lequel le composant polymère (A) est un ou plusieurs copolymères de :
(A.1) au moins un monomère acrylique ayant dans chaque molécule au moins un élément carboxyle, hydroxyle, amide et/ou glycidyle ;
et
(A.2) au moins un monomère d'ester d'acétate.

3. Procédé selon la revendication 1 ou la revendication 2, dans lequel le rapport en poids dans la composition liquide portée par l'eau entrc le composant (A) et le composant (B) se situe dans la plage allant de 0,5:1.0 à 2,0:1.0.

4. Procédé selon l'une quelconque des revendications précédentes, dans lequel le composant polymère (A) est un ou plusieurs polymères et/ou copolymères avec un poids moléculaire dans la plage de 2000 à 100000.

5. Procédé selon l'une quelconque des revendications précédentes, dans lequel le composant polymère (A) est une ou plusieurs polymères et/ou copolymères avec un poids moléculaire dans la plage allant de 10000 à 50000.

6. Procédé selon l'une quelconque des revendications précédentes, dans lequel le film polymère adhésif présent sur la surface d'aluminium ou d'alliage d'aluminium à la fin de l'étape (ii) contient une quantité de zirconium correspondant stoechiométriquement à 1 jusqu'à 50 mg/m² de Zr0₂.

7. Procédé selon l'une quelconque des revendications précédentes, dans lequel le film polymère adhésif présent sur la surface d'aluminium ou d'alliage d'aluminium à la fin de l'étape (ii) contient une quantité de zirconium, correspondant stoechiométriquement à 5 jusqu'à 30 mg/m² de Zr0₂.

8. Procédé selon l'une quelconque des revendications précédentes, dans lequel la composition liquide portée par l'eau utilisée à l'étape 1 contient de plus un solvant organique hydrosoluble présent dans la concentration de moins de 5 parties en poids pour 100 parties en poids d'eau.

9. Procédé selon l'une quelconque des revendications précédentes, dans lequel le mode opératoire de l'étape 1 s'effectue par trempage, pulvérisation, application au rouleau et/ou application en flux et le mode opératoire de l'étape (ii) est effectué en utilisant un courant d'air chaud à une température d'au moins 110°C.

10. Procédé selon l'une quelconque des revendications précédentes, appliqué à une feuille revêtue d'aluminium.
